# EUROPEAN PATENT SPECIFICATION

(11) **EP 4 121 726 B1**
(45) Date of publication and mention of the grant of the patent: **28.05.2025**
(21) Application number: 21713480.8
(22) Date of filing: 17.03.2021
(51) Int. Cl.: G01G 13/22, G01G 17/04

(54) **AUTOMATED SOLUTION DISPENSER SUBSTANCE WEIGHING MECHANISM**
AUTOMATISCHER LÖSUNGSSPENDER UND INHALTSSTOFF WIEGEMECHANISMUS
DISTRIBUTEUR DE DISSOLUTION AUTOMATIQUE ET MECHANISME DE PESÉE DE SUBSTANCE

(30) Priority: 17.03.2020 US 202062990562 P
(43) Date of publication of application: 25.01.2023
(73) Proprietor: accroma labtec Ltd., 4132 Muttenz (CH)
(72) Inventor: MCFADDEN, John, Boston, Massachusetts 02114 (US)
(74) Representative: HGF
(86) International application number: PCT/IB2021/052245
(87) International publication number: WO 2021/186368

(56) References cited:
- WO-A1-2016/125027

## Description

This application claims priority to U.S. Patent Appln. No. 62/990,562 filed March 17, 2020.

### BACKGROUND OF THE INVENTION

### 1. Technical Field

The present invention relates to weighing systems that may be used in an automated solution dispenser for preparing and dispensing a solution, and in particular to weighing systems that permit substance hardware to be cleaned and/or decontaminated and still provide a high degree of accuracy.

### 2. Background Information

A common activity in many chemical fields is the preparation of liquid solutions. This happens for example in liquid handling (wet) laboratories in both industry and academia. Outside of industry, most of the preparation is done manually. Regardless of whether solutions are made manually or by an automated device, the process requires a very sensitive and accurate weighing system, and great care to prevent contamination. An automated device for preparing a solution typically must be able to prepare multiple different solutions with different constituents. In such cases, the structure components that directly handle materials (e.g., solution constituents) must be configured for cleaning to avoid contamination.

Precisely controlling the amount of a substance going into a solution is almost always critical, as otherwise the solution is essentially random. This becomes particularly important in sciences, where there are few cues (visual or otherwise) to the contents of a solution.

What is needed is a substance weighing mechanism that can be used within an automated solution dispenser that improves upon existing substance weighing mechanisms. WO2016/125027 discloses methods and systems that include the use of an automated solution dispenser to form a solution.

### SUMMARY

According to an aspect of the present disclosure, a substance weighing system is provided. The system includes a balance, and axle, a substance dish, an axle support bracket, and
an axle rotator. The axle has a rotational axis that extends between a first axial end and a second axial end. The substance dish is fixed to the axle adjacent the first axial end. The axle support bracket is configured to mount the axle in a manner that permits the axle to rotate about its rotational axis relative to the support bracket. The support bracket is in communication with the balance. The axle rotator has a motor and a clutch mechanism. The clutch mechanism is in communication with the motor and is configured to selectively cause the axle to rotate between a first rotational position and a second rotational position, wherein in the first rotational position the substance dish is positioned to hold an amount of substance, and in the first rotational position the axle rotator is in a contactless state. In the second rotational position, the substance dish is positioned to release the amount of substance.

In any of the aspects or embodiments described above and herein, the clutch mechanism may include a first element attached to the axle and a second element in communication with the motor, and in the first rotational position the first element and the second element are not in contact with one another.

In any of the aspects or embodiments described above and herein, the clutch mechanism may be configured such that rotation of the second element from the first rotational position to the second rotational position causes the second element to contact and rotate the first element in a first direction from the first rotational position to the second rotational position.

In any of the aspects or embodiments described above and herein, a portion of the first element may axially overlap with a portion of the second element.

**In** any of the aspects or embodiments described above and herein, the clutch mechanism may be configured such that rotation of the second element from the second rotational position to the first rotational position causes the second element to contact and rotate the first element in a second direction, wherein the second direction is opposite the first direction.

**In** any of the aspects or embodiments described above and herein, the clutch mechanism may be configured such that rotation of the second element from the second rotational position to the first rotational position causes the second element to contact and rotate the first element in the first direction.

In any of the aspects or embodiments described above and herein, the first element and the second element of the clutch mechanism may be axially aligned with one another.

In any of the aspects or embodiments described above and herein, the first and second elements of the clutch mechanism may be configured for geared engagement with one another for a portion of a complete rotation of the second element.

In any of the aspects or embodiments described above and herein, the balance has a load measuring axis, and the system may include a counterweight attached to the axle, the counterweight attached to the axle in such a manner so as to be selectively positionable relative to the load measuring axis.

In any of the aspects or embodiments described above and herein, the system may further include a first rotational position return device configured to position the axle in the first rotational position.

According to another aspect of the present disclosure, an automated solution dispenser is provided. The dispenser includes a control system and a substance handling system. The substance handling system includes a substance weighing system and a containment unit. The substance weighing system includes a balance, and axle, an axle support bracket, and an axle rotator. The axle has a rotational axis that extends between a first axial end and a second axial end. The substance dish is fixed to the axle adjacent the first axial end. The axle support bracket is configured to mount the axle in a manner that permits the axle to rotate about its rotational axis relative to the support bracket. The support bracket is in communication with the balance. The axle rotator has a motor and a clutch mechanism. The clutch mechanism is in communication with the motor and is configured to selectively cause the axle to rotate between a first rotational position and a second rotational position. In the first rotational position the substance dish is positioned to hold an amount of substance, and the axle rotator is in a contactless state. In the second rotational position, the substance dish is positioned to release the amount of substance. The containment unit is disposed on a first side of the balance, spaced apart from the balance. The substance dish is disposed within the containment unit. The second end of the axle is disposed on a second side of the balance, the second side of the balance is opposite the first side of the balance. The control system is in communication with the substance handling system. The control system includes at least one processor and a memory device configured to store instructions. The stored instructions when executed cause the control system to control the axle rotator to selectively rotate the axle between the first rotational position and the second rotational position.

In any of the aspects or embodiments described above and herein, the containment unit may be a delivery tube.

In any of the aspects or embodiments described above and herein, the dispenser may include a flush and verification system in communication with the control system. The stored instructions when executed may cause the control system to control the flush and verification system to produce a cleaning spray inside the delivery tube, which spray is at least in part directed to clean the substance dish disposed within the delivery tube.

According to another aspect of the present disclosure, a substance weighing system is provided that includes a balance, an axle, a substance dish, and an axle rotator. The axle has a rotational axis that extends between a first axial end and a second axial end. The substance dish is fixed to the axle adjacent the first axial end. The axle rotator is mounted on the balance. The axle rotator is configured to rotate the axle about the rotational axis between a first rotational position and a second rotational position. In the first rotational position, the substance dish is positioned to hold an amount of substance and in the second rotational position the substance dish is positioned to release the amount of substance.

According to another aspect of the present disclosure, a method of weighing a substance is provided. The method includes: a) providing a substance weighing system having a balance, a containment unit disposed outside of and on a first side of the balance, an axle having a rotational axis that extends between first and second axial ends, a substance dish fixed to the axle adjacent the first axial end, wherein the substance dish is disposed within the containment unit, and an axle rotator having a clutch mechanism, the axle rotator disposed on a second side of the balance, opposite the first side; b) operating the axle rotator to position the axle in a first rotational position, and in the first rotational position the axle rotator is in a contactless state; c) depositing a substance amount on the substance dish disposed within the containment unit while the axle is in the first rotational position; d) weighing the substance amount using the balance while the axle is in the first rotational position; and e) rotating the axle from the first rotational position to a second rotational position, where in the second rotational position, the substance dish is positioned to release the substance amount.

The foregoing has outlined several aspects of the present invention in order that the detailed description of the invention that follows may be better understood. Additional features and advantages of the invention will be described hereinafter which form the subject of the claims of the invention.

### BRIEF DESCRIPTION OF THE DRAWINGS

FIG. 1 is a diagrammatic overview of an automated solution dispenser embodiment according to the present invention.
FIG. 2 is a diagrammatic illustration of a central mixing chamber embodiment.
FIG. 3 is a diagrammatic illustration of a flush and verification system embodiment.
FIG. 4 is a diagrammatic illustration of a liquid handling system embodiment.
FIG. 5 is a diagrammatic illustration of mechanical seal embodiments.
FIG. 6 is a diagrammatic illustration of a pivot pipe embodiment.
FIG. 7 is a diagrammatic illustration of a solids handling system embodiment.
FIG. 8 is a diagrammatic illustration of a turn table embodiment for a solids handling system.
FIG. 9 is a diagrammatic illustration of a portion of the turn table embodiment shown in FIG. 8 in more detail.
FIG. 10 is a diagrammatic illustration of a dosing system embodiment.
FIG. 11 is a diagrammatic illustration of a solids platform weight scale and dosing driver embodiment.
FIG. 12 is a diagrammatic illustration of a solids platform and dosing driver embodiment.
FIG. 13 is a diagrammatic illustration of a weight scale embodiment.
FIG. 14 is a diagrammatic illustration of a bottle handling system embodiment.
FIG. 15 is a diagrammatic view of a solids weighing mechanism embodiment.
FIG. 16 is a diagrammatic side view of a clutch mechanism embodiment.
FIG. 17 is a diagrammatic top view of the clutch mechanism embodiment shown in FIG. 16.
FIG. 18A is a diagrammatic sectional view of the clutch mechanism embodiment shown in FIG. 16 in a contactless state (first rotational position).
FIG. 18B is a diagrammatic sectional view of the clutch mechanism embodiment shown in FIG. 16 in a contacted state.
FIG. 18C is a diagrammatic sectional view of the clutch mechanism embodiment shown in FIG. 16 in a contacted state (second rotational position).
FIG. 19A is a diagrammatic side view of a clutch mechanism embodiment, shown in a contactless state (first rotational position).
FIG. 19B is a diagrammatic side view of a clutch mechanism embodiment, shown in a contacted state (second rotational position).
FIG. 20 is a diagrammatic view of an axle with a counterweight.
FIG. 21 is a diagrammatic view of a solids weighing mechanism embodiment.

### DETAILED DESCRIPTION

Aspects of the present disclosure are directed to weighing mechanism embodiments having a substance dish for receiving substances disposed within a containment structure and a weighing mechanism disposed outside of that containment structure. The present disclosure weighing mechanism embodiments provide significant improvements over currently available weighing mechanisms. To illustrate the utility of the present disclosure weighing mechanism embodiments, the aforesaid embodiments are described as they may be utilized within an automated solution dispenser. The present disclosure weighing system embodiments are not, however, limited to use within an automated solution dispenser.

Weighing devices configured to measure substance amounts in an automated device are necessarily very sensitive devices, and typically electronically controlled. In known automated solution dispensers, substances added to a solution are typically weighed using one of two different techniques. In some existing systems, a substance may be disposed within a container (e.g., a "substance holder") that contains a substantial amount of the substance; e.g., a substance holder that stores an amount of substance sufficient to produce many solutions. In these systems the amount of substance dispensed to the solution is determined by measuring the weight of the substance holder before and after the amount of substance is dispensed to the solution. A weighing device deviation margin is typically a function of the amount of weight of the item being weighed. The weighing deviation of this technique, therefore, is likely a function of the total weight of the substance holder and the amount of substance held within the substance holder as opposed to being a function of only the weight of the dispensed substance. In other techniques, the substance to be added to the solution is dispensed into the solution. The amount of substance actually dispensed to the solution is determined by measuring the weight of the container holding the solution before and after the amount of substance is dispensed into the solution container. The weighing deviation margin of this technique, therefore, is likely a function of the total weight of the solution container and the added substance, as opposed to being a function of only the weight of the dispensed substance. The present weighing device embodiments, in contrast, measure just the amount of substance. The weighing deviation margin of the present weighing mechanism embodiments, therefore, is likely a function of the weight of the substance itself and therefore substantially less than the known techniques. Other aspects of the present disclosure weighing mechanism embodiments are described herein.

An automated solution dispenser prepares liquid solutions from a combination of solids and liquids, using a range of sensors to verify the correctness of the prepared solution. A number of sub-systems comprise the automated solution dispenser, which are grouped as core systems and auxiliary systems.

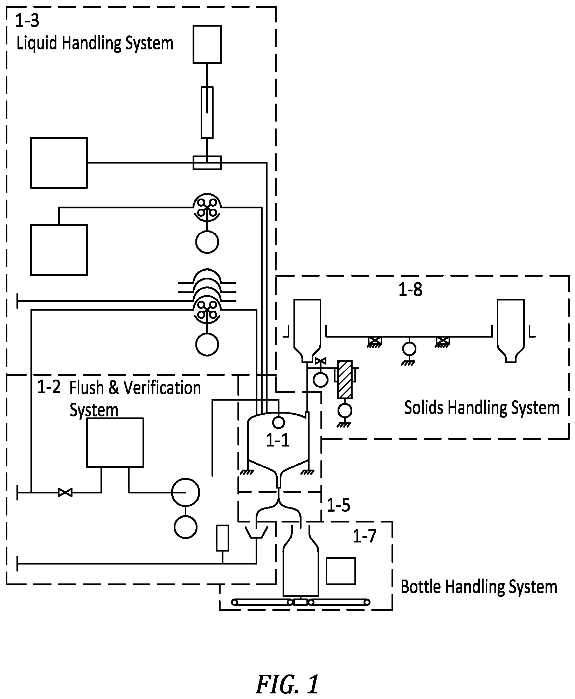

Referring to FIG. 1, the core systems may include a central mixing chamber (CMC), a flush and verification system (FVS), a liquid handling system (LHS), a control system (CS), and a pivot pipe system (PPS).

Central Mixing Chamber (CMC) (1-1): The CMC (1-1) collects and holds the dispensed liquids and solids, mixes them, and adjusts the pH value of the solution with help of the liquid handling system (LHS) (1-3) and the solid handling system (SHS) (1-6), and the temperature of the solution according to the user's specification. The resulting solution is then discharged into the pivot pipe system (PPS) (1-5). Next, the CMC (1-1) is cleaned in preparation for the next solution. The CMC may include the following sub-systems: a) mixing chamber (e.g., by means of a cylindrical container); b) pH sensor (e.g., by means of a pH sensor); c) temperature sensor and control (e.g., by means of a controlled immersion heater); d) stirrer/agitator (e.g., by means of a magnetic stirrer bar contained in the CMC (1-1) which is driven by an external rotating magnetic field); e) liquid level sensor (e.g., by means of an ultrasound level sensor); f) turbidity sensor (e.g., by means of a turbidity sensor); and g) controlled outlet (e.g., by means of a ball valve).

Flush and Verification System (FVS) (1-2): The FVS (1-2) is an integrated system that ensures that the CMC (1-1) is clean before each use to prevent any cross contamination between sequentially prepared liquid solutions. The FVS may include the following sub-systems: a) cleaning mechanism (e.g., by means of a spray device releasing heated water); and b) cleanliness sensor (e.g., by means of monitoring the conductivity of the CMC discharge).

Liquid Handling System (LHS) (1-3): The LHS (1-3) releases controlled amounts of liquids into the CMC (1-1). The LHS may include the following sub-systems: a) delivery mechanism (e.g., by means of a peristaltic pump); and b) measuring mechanism (e.g., by means of a peristaltic pump).

Control System (CS): The CS is the electronics and software logic that controls all the core and auxiliary systems within the device.

Pivot Pipe System (PPS) (1-5): The PPS (1-5) directs the CMC discharge to the correct station (e.g., filtering/bottling position or drain position).

The auxiliary systems include, but are not limited to, a solid handling system (SHS), a bottle handling system (BHS), a filtering system (FS), a bottle marking/labeling system (BM), and a water purifier.

Solid Handling System (SHS) (1-6): the SHS includes the following sub-systems: a) delivery mechanism (e.g., by means of an enclosed dosing screw); and b) measuring mechanism (e.g., by means of a load cell).

Bottle Handling System (BHS) (1-7): The BHS (1-7) supplies an empty bottle (or any other suitable container) to the CMC discharge point, which is then filled with the solution discharged from the CMC (1-1). It also ensures that the bottle is correctly positioned. In some cases, the BHS (1-7) may feed directly into another machine/equipment.

Filtering System: The Filtering System filters the solution before it is bottled.

Bottle Marking/Label (BM): The BM marks/labels the bottle containing the prepared solution with a solution information label (e.g., by means of a printed sticky label or directly printing the information onto the bottle).

Water Purifier: The Water Purifier includes deionization and/or filtration of feed/input water to obtain a certain water quality, e.g., "ultrapure" or Type 1 water as for example laid out by ISO 3696. The addition of a water purification system is advantageous in an automated solution preparation system, since that purified water is predominantly used to either prepare liquid solutions or clean materials and components used in the preparation process.

### Central Mixing Chamber

The purpose of central mixing chamber (CMC) is to mix user specified liquid solutions from various forms of solids and liquids, without direct human input. The CMC has a number of aspects, including one or more of: a) liquid and solids inlets; b) mixing area and heating; c) stirrer; d) instrumentation; and e) valve & outlet, and any combination thereof.

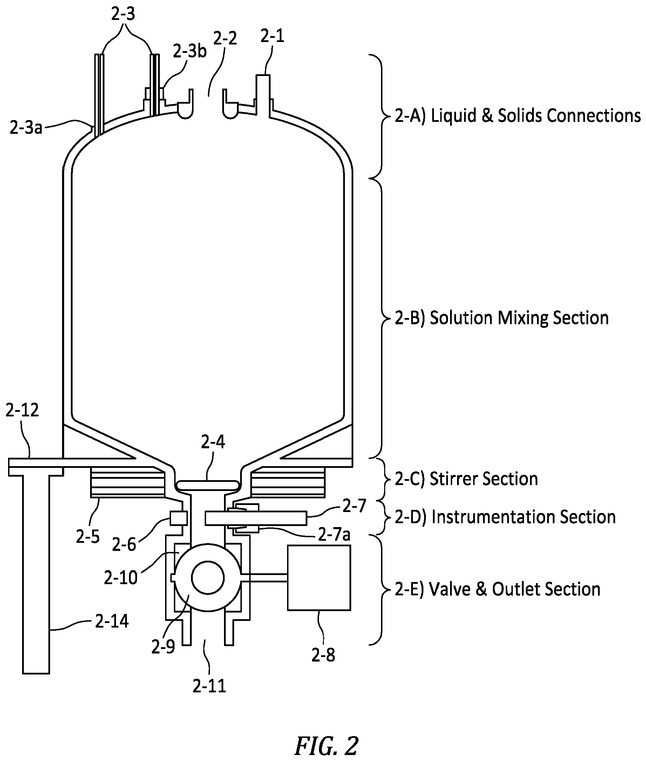

Referring to FIG. 2, the liquid and solid inlets are located in the top section (2-A) of the CMC (2-B), where each liquid has its own inlet (2-3), while solids have a common inlet port (2-2). The liquid tubes may use a nozzle (e.g., one or more needles) to control the size of liquid drops that enter the CMC at a time, increasing the accuracy of the liquid dosing. The liquid inlet holds the liquid tube in place and when necessary will have a sealed connection, either with a sealant (2-3A) or a mechanical seal (2-3B).

In some embodiments, the mechanical seal may be in the form of a threaded connection with O-ring seals, or as a compression fitting. The liquid inlet can be either let directly into the CMC or through a nozzle.

The cleaning nozzle ring (lower section of 2-2) is also located in the top section of the CMC and surrounds the common solid inlet. The cleaning nozzle provides the cleaning and flushing liquid to clean the CMC between each solution creation. All exposed internal surfaces of the CMC are cleaned to prevent cross contamination between sequential preparation of solutions. A nozzle example is a hollow ring that has spray nozzles on the inside (directed towards the solid inlet) and on the outside (directed towards the exposed internal CMC surface) through which pressurized hot water is delivered to all the CMC surfaces.

In some embodiments, the solid inlet and cleaning nozzle are instead separated, and use a spray ball nozzle (static or dynamic). The cleaning nozzle may also be incorporated into the CMC wall, so that the nozzle center becomes the solid's inlet and could also contain the liquid inlets.

The bottom of the CMC is comprised with the Valve & Outlet section (lowest point) (2-E), with the instrumentation (sensor) section (2-D) above it, and the stirrer/agitator section (2-C) on top of it (It is possible to swap the two sections, 2-C and 2-D around). The Valve & Outlet section is comprised of the valve (2-9), which has an actuator (2-8), which could be a stepper motor or any other form of actuator. This actuator opens and closes the valve. The depicted implementation uses a ball valve design (2-10) that is incorporated into the CMC body, other designs utilize a plug design. The valve (2-9) when in the closed position, will hold the liquid solution within the CMC. When the valve is open the liquid will be directed through the outlet (2-11) either to the drain or to the Bottle Handing System (BHS) or the Filtering System of the device. If the plug valve design is used, the plug is opened either directly or indirectly by a linear actuator (e.g., a solenoid). A standard off the shelf valve can be used instead of an integrated valve assembly.

The volume of the solution in the CMC may be measured by a level sensor (2-1), as the level/volume of the CMC can be mathematically determined. The instrumentation section allows the pH sensor (2-7) to penetrate the CMC wall, which is sealed either with a sealant or a mechanical seal (2-7A). This section also houses the temperature sensor (2-6) and has room for additional sensors. The instruments can be located below or above the stirrer section, to prevent instrumentation from possible damage from the rotating stirrer (2-4). The mechanical seal may be in the form of a threaded connection with O-rings or a compression fitting.

The stirrer may be comprised of two parts: the external driver (2-5) and the internal stirrer (2-4). The internal stirrer may be a magnetic bar (2-4), or equivalent, located within the CMC. The external driver (2-5) is located outside of the CMC and provides a rotating magnetic field around the CMC's centerline. This magnetic field interacts with the internal stirrer's permanent magnetic field, causing it to rotate about the CMC's centerline. An example of the external driver, as shown in the drawings, is a set of synchronized electromagnets that are timed to induce a rotating electromagnetic field. Alternatively, one or more magnets may be mounted on a bearing or a race-rail that is then rotated around the CMC's centerline using a motor or similar actuator and a coupling (belt, gear, etc.). Dedicated hard points (2-12 & 2-14) support all the weight of the CMC, its components and liquid solution. Additionally, a heating and cooling arrangement can be implemented to control the temperature of the solutions being created.

The material selected for the CMC and all the wetted surfaces needs to be compatible with the range of chemicals being handled, (an example of an acceptable material in most applications is polyethylene terephthalate or "PET"). The CMC is sized to hold the maximum desired liquid solution volume plus any additional space required to enable uniform mixing (for example the total CMC volume may be 1.25 times the maximum desired liquid solution volume).

The CMC components have a degree of integration available to it. For example, the valve can be either integrated into the CMC body or considered as a separate component. The same applies to the cleaning nozzle. An alternative to the cleaning nozzle is to seal the CMC and flood/flush the CMC repeatedly until clean. An additional option is to mount load cells on the legs to measure the weight of the CMC and solution. An alternative to leg supports with load-cells it to mount the CMC on a canter lever with integrated load-cells/strain gauges. It is also possible to mount all the legs on a single load-cell/scale.

### Flush and Verification System (FVS)

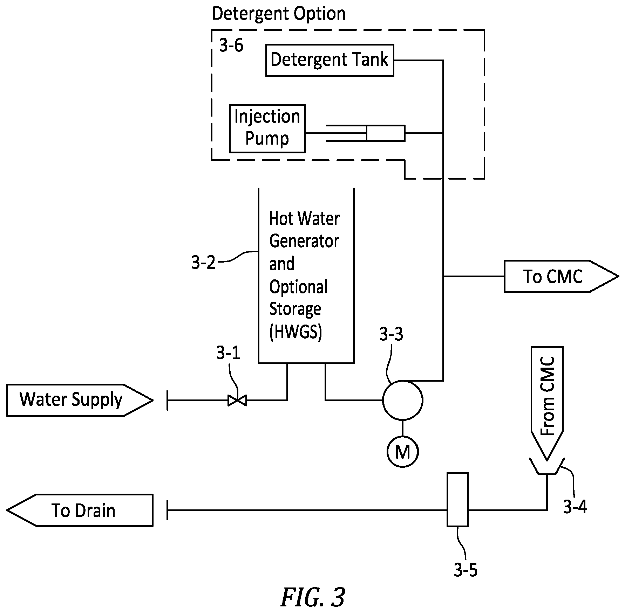

The flush and verification system (FVS) provides the device with an automated system to clean the CMC and the ability to verify the cleanliness of the CMC. This is achieved by providing pressurized water, with the option of adding detergent to the CMC, and measuring the conductivity, or equivalent, of the water leaving the CMC to measure the cleanliness. Referring to FIG. 3, the FVS may include one or more of: a) a hot water generator with an optional storage (HWGS)(3-2); b) a pressure pump (3-3); c) piping and tubing, and fittings; d) a cleanliness sensor like conductivity meter or equivalent (3-5); and e) an optional detergent tank and injection pump (3-6), or any combination thereof. In some embodiments, pressurized water can be provided from an external source thereby making the pressure pump redundant.

The FVS is connected to the water supply and can be isolated by using the inlet valve (3-1). This is to prevent leakage if the supply is accidentally disconnected, without following the draining procedure. The water flows into the hot water generator and optional storage (HWGS) (3-2). The HWGS can be either a custom-made water tank with an installed electrical heater, or a flow through heater.

Depending on the water supply source specification, it is possible to replace the HWGS (3-2) with a flow through heater without storage. If the supply water is insufficient then the hot outlet of the HWGS (3-2) may be connected to the pressure pump (3-3) inlet, and the pump outlet may be connected to the CMC. Otherwise, the hot outlet of the HWGS may be connected to the CMC. The pump (3-3) is sized to provide sufficient fluid pressure and flow to clean the CMC and will be dependent on the size of the CMC and its cleaning nozzle design. Any pump can be used, provided that it meets the flow and pressure requirements and is able to handle the hot water safely.

The water from the CMC will flow into the drain station (3-4), which is connected to the drains. In the line a conductivity sensor (3-5), or equivalent, may be mounted to test the cleanliness of the water exiting the CMC.

The detergent option (3-6) consists of a detergent source, an injection pump, and a check valve. The option can be implemented by installing a check valve on the connections between the hot water tank and pressure pump. The detergent can be stored either in an internal tank or an external tank/bottle and is connected to an injection pump. The injection pump will force the detergent into the water line between the check valve and the pump. The detergent needs to overcome the water pressure. The check valve is to prevent the detergent from flowing into the hot water tank. The detergent tank and injection pump can be combined into a syringe that the user will need to replace once it is empty.

### Liquid Handing System

The liquid handing system (LHS) is configured to accurately deliver a specified amount of liquid. These liquids include but are not limited to acids (various concentrations), bases (various concentrations), water pH calibration liquids, pH sensor storage solution, stock solutions (e.g., chemicals that are only available in liquid form), and components that required to be added in liquid form for safety, dosing accuracy, etc., requirements, and any combination thereof.

The LHS draws from various sources, which can be categorized as: a) a continuous supply (e.g., water from the water mains); b) an internal supply (e.g., one or more integrated tanks); and c) an external supply (e.g., one or more storage bottles).

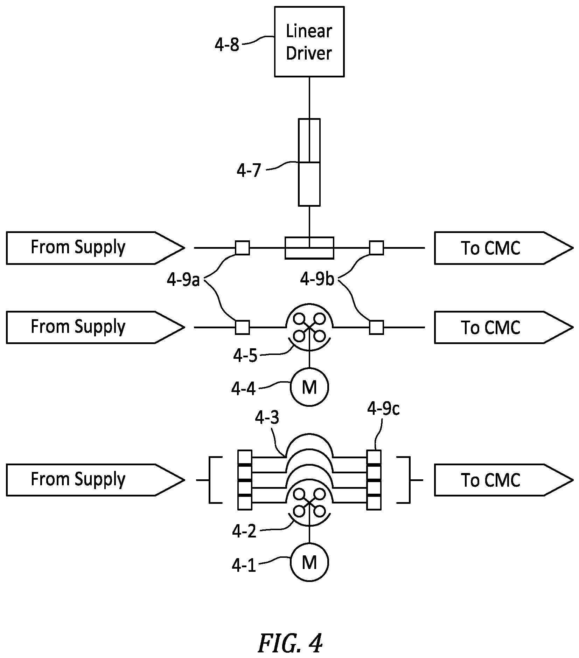

Referring to FIG. 4, the liquid is drawn in through, e.g. a peristaltic pump (4-2, 4-5, 4-7) and then pumped in controlled amounts into the CMC. The pumps configuration can be a single pump per CMC or one pump serving multiple CMCs, or the like. In the case of multiple CMCs, the liquid path will need to be controlled by either a single valve/selector or through a series of valves. The pumps may be driven by either a geared/non-geared stepper motor (4-1, 4-4), a geared/non-geared DC motor (4-1, 4-4), or a linear driver (4-8), or the like.

The pumps used are of a positive displacement type, which include but are not limited to a) a single peristaltic pump (4-5); b) a multiple channel peristaltic pump (4-2, 4-3); c) a syringe pump (4-7); d) a piston/plunger pump (4-7); e) a reciprocating pump (4-7); f) a diaphragm pump; g) a screw pump; or h) a rotating lobe pump, or the like, or any combination thereof. The pumps may be either self-priming, gravity-primed by placing the pump underneath the liquid source, or the liquid source (e.g., a water main line) may be pressurized.

A dosing valve or an alternative method of dosing specific amounts of liquids may be included.

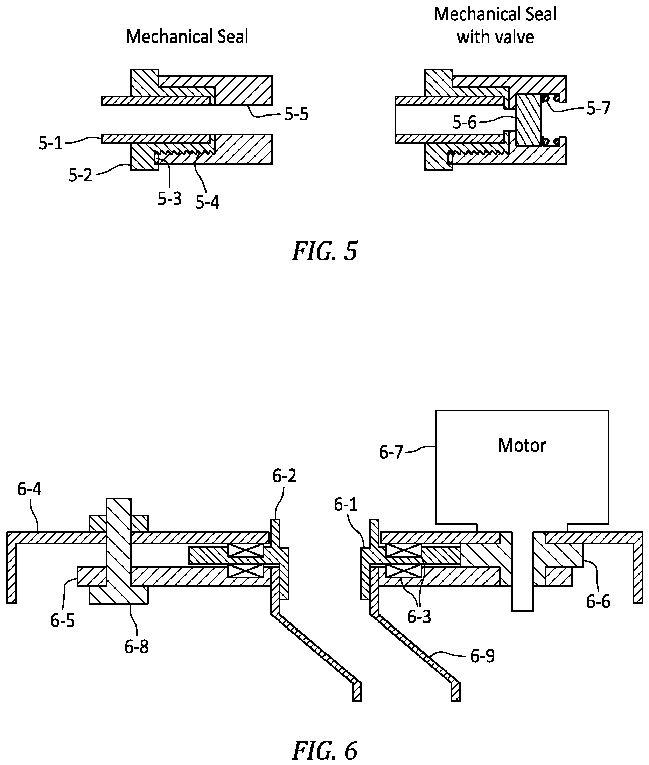

The liquid sources, pumps, and CMC may be connected by tubes (4-9a & 4-9b & 4-9c). The tube material is selected to be suitable for the liquid contained within. The tubes connections can vary with each application and include the following: a) Sealed; The tube is permanently sealed to the item using an adhesive and sealant that is resistant to the liquid handled; b) Mechanical Seal (MS); Referring to FIG. 5, the tube (5-1) is set in the tube holder (5-2) which in then either screwed (5-4) into or twist-locked into the base (5-5). An O-ring (5-3) ensures that there is no leakage and can be install on any tube holder (5-2) and base (5-5) interface. Another option is to have a valve (5-6) incorporated in the base (5-5) that will be opened by the tube holder (5-2). The valve (5-6) will be closed by a spring (5-7) when the tube holder (5-2) is removed; c) Standard compression fitting; and d) barbed fittings.

### Control System

The purpose of the control system (CS) is configured to control the operation of all systems in the device. The CS may include one or more of: a) low level circuitry, comprising the hardware driver (e.g., stepper motor controller, power relays, etc.); b) sensor information post-processing circuitry (e.g., current loop driver, Low noise amplifier, etc.); c) microcontroller/microprocessor to control the low level circuitry; and d) touchscreen user interface and CPU, running the program code and hosting the database structure, and any combination thereof.

The CS may include any type of computing device, computational circuit, or any type of process or processing circuit capable of executing a series of instructions that are stored in memory, including instructions for accomplishing tasks associated with the methodologies described herein. The CS may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory may represent one or more algorithms for controlling the components described herein, and the stored instructions are not limited to any particular form (e.g., program files, system data, buffers, drivers, utilities, system programs, etc.) provided they are executable by a computing device. The memory may be a non-transitory computer readable storage medium configured to store instructions that when executed by a computing device, cause the computing device to perform or cause the performance of certain functions. The memory may be a single memory device or a plurality of memory devices. The present disclosure is not limited to use of any particular type of memory device. One skilled in the art will appreciate, based on a review of this disclosure, that the implementation of the CS may be achieved via the use of hardware, software, firmware, or any combination thereof. As described herein, the CS may be in communication system components that are useful in performing the methodological functions described herein. Communications between the CS and system components may be accomplished via hardwire or by wireless communication devices. The present disclosure is not limited to any particular communications protocols, standards, etc.; e.g., profinet, TCP/IP, Modbus, etc.

### Pivot Pipe

The purpose of the Pivot Pipe (PP) is to direct the CMC discharge to the correct station. There will be at least two stations: a) a drain (for the FVS); and b) a bottling station. In some embodiments, the PP may include other stations, including but are not limited to, one or more of: a) pH sensor storage liquid recycle; b) filtering and bottling; c) degassing and bottling; and d) analyzing (e.g., fluorescence analysis) and bottling.

Referring to FIG. 6, the gear holder (6-1) interfaces with the CMC outlet, with an O-ring (6-2) to create a seal so that the CMC discharge does not leak out. The gear holder (6-1) has two thrust bearings (6-3) on the top and bottom of the gear holder (6-1) and has a bottom plate (6-5) that is bolted (6-8) to the top supporting plate (6-4). The thrust bearing (6-3) is set in grooves to ensure that it is correctly positioned and allows the gear holder to rotate freely. The gear holder (6-1) has a set of gears on the outer diameter and which interfaces with the pivot cog (6-6). The pivot cog is mounted on motor (6-7) that controls the rotation and position of the gear holder. A curved rigid pipe (6-9) is attached to the gear holder (6-1) and rotates with it. The liquid from the CMC flows through the rigid pipe (6-9) to the correct station. Limit switches may be used to confirm the position of the rigid pipe (6-9) discharge. Other alternatives include systems that enable the correct positioning of a pipe (flexible or rigid). These could include linear systems or disposable systems. It is possible to eliminate the need of the pivot pipe when the plug valve design is used.

### Solid Handling System

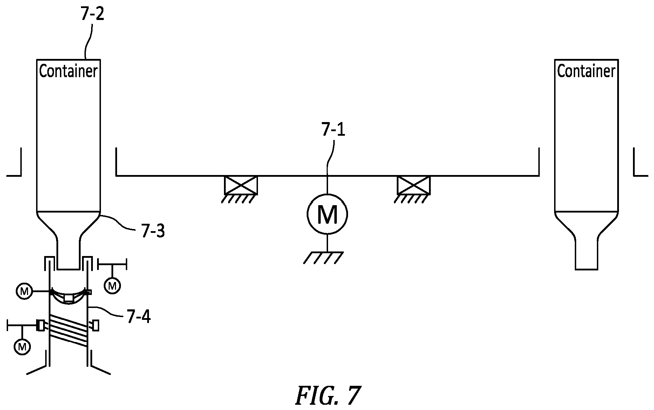

The purpose of the Solid Handling System (SHS) is to accurately dose various chemicals in loose solid/powder form. Referring to FIG. 7, the system may include one or more of the following components: a) a solids Turn-Table (STT) (7-1) (or equivalent); b) a solids container (7-2); c) a solids dosing mechanism (SDM) (7-3); d) a delivery system (SDS) (7-4); e) a dosing mechanism driver (DMD) (7-4); and f) a solid weighing mechanism (SWM) (7-4), or any combination thereof. The solids can come various forms, which can include, crystalline form, loose powder, or clumpy powder, or the like.

The solids are held in the solid container (7-2). The solids container can either be a custom/purpose made or the original solids container. Each container has a SDM (7-3) mounted on the bottom of the container. The containers are located on a STT (7-1) or equivalent device that enables the desired solids container to be aligned with the desired CMC's solid's inlet. Once the container is in position the SDS (7-4) may rise up and engage SDM (7-3). In the process the DMD (7-4) may be connected to the SDM (7-4), and the DMD (7-4) may drive the SDM (7-3) and dose the solids in controlled amounts. The solids may be dispensed onto the SWM (7-4), which is directly underneath the SDM (7-3). Once a correct amount of solids (e.g., determined by mass) is dispensed, the SWM then deliver the solids into the CMC. The SWM can be incorporated into the various aspects of the solid handling. For example, the SWM may be designed to measure the decreasing weight of the solid's container.

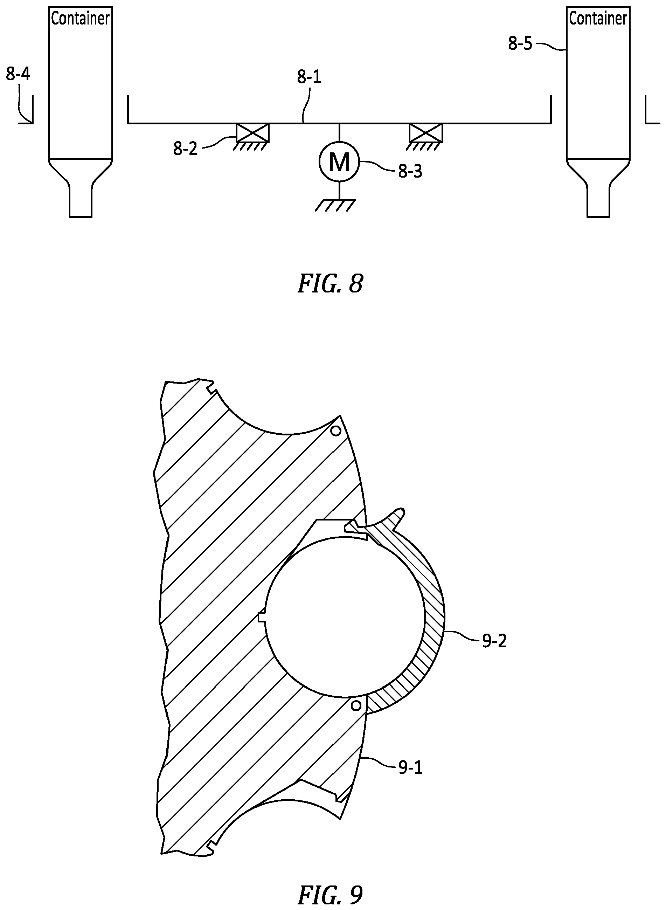

Referring to FIGS. 8 and 9, the STT may be a turn table (8-1 & 9-1) with the containers (8-5) attached at the circumference. The containers (8-5) may be held in place with a clip (9-2) or slotted in place (8-4) or suspended of the table. The turn table (8-1) is supported on thrust bearing (8-2) or equivalent, and the turn table (8-1) may be rotated by a motor (8-3) that is mounted on the central axis.

Alternatively, a conveyor system can be implemented to fit more bottles in the same footprint area, with the added complexity. The turn table may be driven indirectly by a belt system.

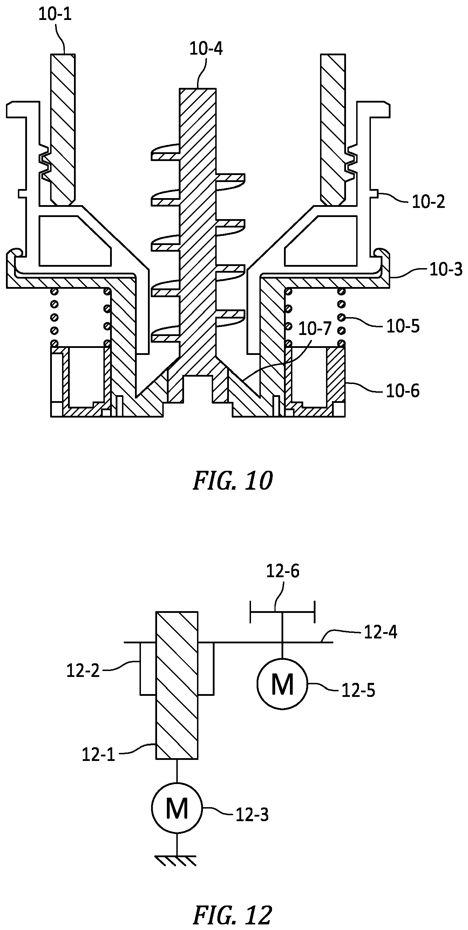

Referring to FIG. 10, the SDM is composed of an adapter piece (10-2) that screws on to the container (10-1) that holds the solids. The rotating base (10-3) fits within the adapter (10-2), and the base holds the dosing screw (10-4). The rotating base (10-3) with the dosing screw (10-4) are able to freely rotate around the adaptor. The gear gate (10-6) has a slotted groove that fits on the rotating base (10-3). This allows the gear gate to move up and down. The springs (10-5) hold the gear gate in the closed position (down), and the gear gate may be opened when the SDS engages the SDM. The gear gate (10-6) has a set of gears on the outer diameter for the DMD with and through which to provide the rotational drive and control.

The gear gate (10-6) may serve at least two purposes. A first purpose is to provide a rotational drive and control to the rotating base (10-3) and dosing screw (10-4). A second purpose is to close the container and internal workings of the SDM when the container is not engaged and is dosing solids. This also allows the container to be stored with solids in any position without leaking any solids.

When the dosing screw (10-4) is rotating, the exposed screw grabs onto the solids and carries the solid into the closed section of the screw. Once solid reaches the bottom of the screw, it is free to fall out of the screw and out though the open gate. If the solid sticks to the screw the motion of the solids above pushes the stuck solid out.

Another addition would be to incorporate a multi-variable flow through screw that can be selected by controlling the height of the gear gate.

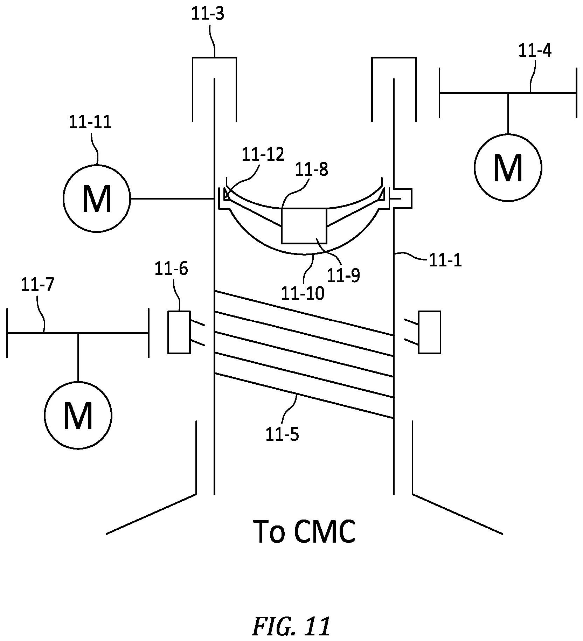

Referring to FIG. 11, the DMD may include a delivery tube (11-1) which houses the SWM (11-8, 11-9, 11-10, 11-11, 11-12). On top of the deliver tube sits the gear cog (11-3). The gear cog (11-4) is the one that mates with the gear gate (10-6), which gears are designed to be self-aligning. The gear cog is driven by a motor (stepper, DC, etc.) via a gear, belt or equivalent. The threaded section of the tube (11-5) forms part of the lifting system. A lead gear (11-6) engages the tube threads (11-5) and is driven by a driving cog (motor driven) (11-7). This driving cog rotated the lead gear (11-6) which in turn drives the tube (11-1) up or down via the tube threads (11-5).

The SWM may include a weight dish (11-8) that is attached to a weight sensor (11-9). The weight sensor is housed in a rotating case (11-10). The casing has a rotating axial (11-11) which rotates the weight dish, sensor, and case. This rotation is driven by a motor, solenoid or equivalent (11-11). The axis (11-11) is hollow for the weight sensor (11-9) wires. A barrier (11-12) is put in place to protect the sensor from liquid and solid ingress, for example bellow. This barrier cannot restrict the movement of the dish nor hold any load. An alternative is to mount the weight sensor (11-9) outside the tube (11-1) to protect the sensor from any potential liquid, solid or corrosion damage. Care needs to be taken as the solids might have the tendency to attach themselves to the tube (11-1) walls. The tube shape should be designed to eliminate or minimize this issue.

Otherwise more active approaches include passive/active electrostatic barrier, non-stick paint, or material, etc. However, the inside of the tube (11-1) up to and including the SWM may be cleaned by a spray nozzle portion of the FVS producing a sprayed liquid (e.g., water) during the cleaning cycle.

Alternatively, other linear actuator systems can be used instead of the lead screw, to raise the platform.

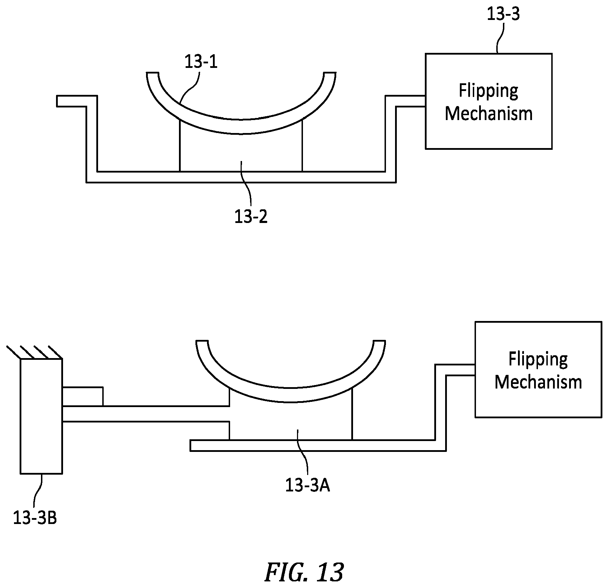

Referring to FIG. 12, the DMD may include a gear cog (12-6) mounted on a motor (12-5). The gear cog (12-6) is the one that mates with the gear gate (10-6), the gears are designed to be self-aligning. The DMD is mounted on the raising platform (12-4) of the SDS. The platform (12-4) is raised by a lead screw assembly. This assembly consists of a screw nut (12-2) attached to the platform (12-4), which is set on the lead screw (12-1). The lead screw is rotated by the motor (12-3) that either rises or lowers the platform, which in turn either engages or disengages the SDM. Referring to FIG. 13, accurate dosing and application may be achieved using the SWM (7-4). The SWM (7-4) measures the solids dosed from the selected container. The SWM may include weighting dish (13-1), scales mechanism (13-2, 13-3A, 13-3B) (load cell or force compensated electromagnet), and a flipping mechanism (13-3). The flipping mechanism (13-3) can be either independent (dedicated driver) or dependent (a set of guides or mechanical linkages) of the raising platform (12-4). The SWM moves up and down in the axis of the CMC solid's inlet, and in the process rotates so that the weighting dish (13-1) is facing upwards to receive the solids from the SDM at the up position. The weight dish (13-1) rotates when in moves down so that the solids in the weighing dish are deposited into the CMC, and then the dish is able to close the CMC's solid inlet.

As mentioned before this system measures the solids dispensed from the solid containers. Another alternative is to measure the solid container as the solid is being dosed.

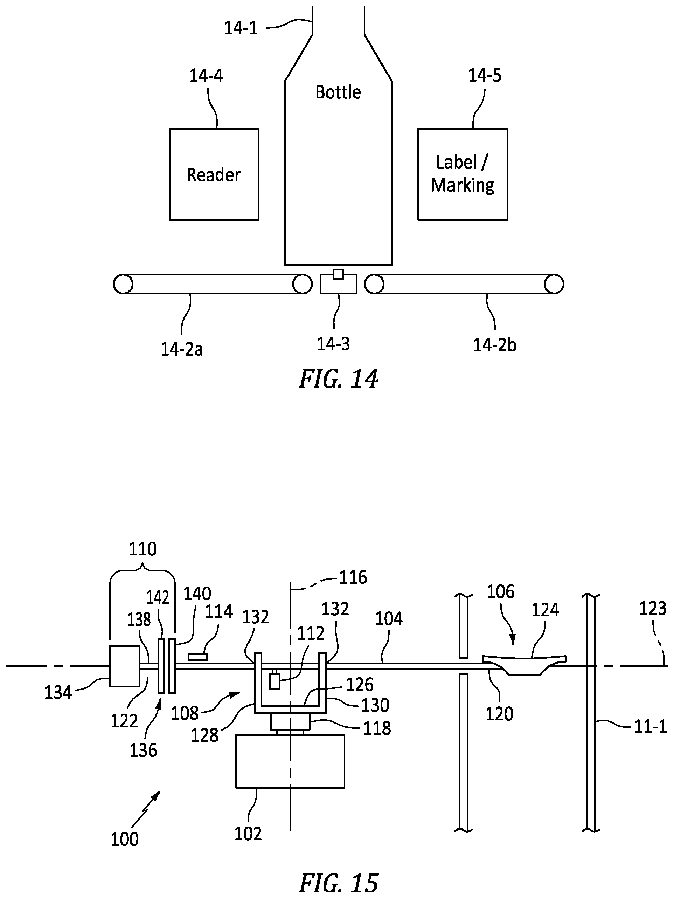

Referring to FIG. 15, in alternative embodiments, the solids weighing mechanism (SWM) 100 may include a balance 102, an axle 104, a substance dish 106, an axle support bracket 108, and an axle rotator 110. In some embodiments, the SWM 100 may also include a counterweight 112, and/or an axle rotational position detector 114.

The balance 102 is configured to measure the weight of a substance with a predetermined degree of accuracy and with an acceptable amount of uncertainty. The weight capacity of the balance 102 may be selected to suit the application. In many instances a balance 102 that has a capacity of up to 250 grams is useful, but the present disclosure is not limited thereto. Most balances are sensitive to error caused by a load applied to the balance that is "off-center". A balance 102 may be described as having a load measuring axis 116. If a load is applied to the balance a distance from the aforesaid load measuring axis 116 (i.e., "off-center"), the asymmetric loading of the balance 102 may cause the balance 102 to inaccurately report the weight of the load. In some instances, the separation distance between the load center of gravity and the load measuring axis 116 may be considered to be a moment arm. In such cases, the weight of the load and the moment arm can create a torque applied to the balance 102 which can also negatively affect the accuracy of the balance 102. The exemplary balance 102 diagrammatically shown in FIG. 15 includes a load platform 118 centered about a load measuring axis 116. The balance 102 is configured to be in communication with the control system (CS); e.g., providing communication signals indicating operational status of the balance 102, the load weight sensed by the balance 102, etc. A non-limiting example of an acceptable balance is a model Wza 224-L produced by Sartorius AG of Göttingen, Germany.

The axle 104 extends lengthwise between a first axial end 120 and a second axial end 122 and includes a rotational axis 123 extending between the axial ends 120, 122. The axle 104 is configured (e.g., material, stiffness, etc.) to have minimal or no appreciable deflection for the anticipated substance weights to be measured. The material of the axle 104 is chosen to be non-reactive in the SWM environment. The axle 104 shown in FIG. 15 has a cylindrical cross-section geometry, but the present disclosure is not limited to a cylindrical geometry.

The substance dish 106 may be configured to hold a solid substance (e.g., a powder form) received from the solid handling system (SHS). As indicated below, the substance dish may be configured to hold a liquid substance, or both a solid substance and a liquid substance. The substance dish 106 includes at least one face surface 124 onto which a substance may be deposited. The face surface 124 may have a planar configuration, or a concave configuration, or some combination thereof. The present disclosure is not limited to any particular face surface 124 configuration. The substance dish 106 is configured to be mounted on or to the axle 104 in a fixed manner such that rotation of the axle 104 about the rotational axis 123 causes rotation of the substance dish 106. The substance dish 106 is comprised of a material that is non-reactive in the SWM 100 environment, and preferably one that can be readily cleaned of substances used in the present dispensing system. In some embodiments, the axle 104 and the substance dish 106 may be a unitary structure; e.g., with the substance dish 106 disposed at the first axial end 120.

The axle support bracket 108 is configured to be in communication with (e.g., attached to) the load platform 118 of the balance 102. The bracket 108 is further configured to be pivotally mount the axle 104, and thereby allow pivotal movement of the axle 104 relative to the bracket 108. In the embodiment shown in FIG. 15, the axle support bracket 108 includes a base panel 126, a first support flange 128, and a second support flange 130. The base panel 126 extends between and is attached to the first and second support flanges 128, 130. The base panel 126 is in communication with (e.g., attached to) the load platform 118 of the balance 102. The support flanges 128, 130 may be parallel one another. Each support flange 128, 130 includes an axle aperture 132, and the axle apertures 132 are aligned with one another. In some embodiments, the axle apertures 132 are configured to have a tight slide fit with the axle 104 that permits free rotation of the axle 104 relative to the axle support bracket 108. In some embodiments, bearings (not shown) may be used to mount the axle 104 to the axle support bracket 108.

The axle rotator 110 is configured to rotate the axle 104 and attached substance dish 106 about the rotational axis 123 between at least a first rotational position and a second rotational position. In the first rotational position, the substance dish 106 is positioned to receive an amount of substance; e.g., the face surface 124 of the substance dish 106 is positioned in a substantially horizontal plane, substantially perpendicular to a gravitational vector. In the second rotational position, the substance dish 106 is positioned to permit substance residing on the face surface 124 to gravitationally fall off of the face surface 124 for entry (directly or indirectly) into the central mixing chamber (CMC 1-1); e.g., in the second rotational position, the face surface 124 of the substance dish 106 is positioned in a plane wherein the vertical component of the plane is sufficient for the substance to move off of the face surface 124 due to gravity. In some embodiments the axle rotator 110 may be configured to rotate the axle 104 and attached substance dish 106 to more than just the first and second rotational positions; e.g., the axle rotator 110 may be configured to rotate the beam and attached substance dish 106 a full rotation (360°).

The axle rotator 110 includes a motor 134 and a clutch mechanism 136. The axle rotator 110 is configured so there is no mechanical contact, directly or indirectly, with the axle 104 (i.e., "contactless") when the axle 104 and attached substance dish 106 are in position to receive a substance from the solid handling system (SHS); i.e., the first position described above. Hence, in the contactless state, the motor 134 is not in communication with the axle 104 and the balance 102. The motor 134 is in communication with the control system (CS) and controllable by the CS.

The motor 134 may have a shaft 138 that is rotationally driven; e.g., an electric stepper motor or the like. Alternatively, the motor 134 may be a linear driver or piston type device. Any motor can be used that can be controlled to, in turn, control the amount and speed of axle 104 rotation.

The clutch mechanism 136 includes a first element 140 and a second element 142. The first element 140 is attached to the axle 104, and the second element 142 is engaged directly or indirectly with the motor 134; e.g., in a direct engagement the second element 142 may be affixed to the motor 134, and in an indirect engagement the second element 142 may be in communication with the shaft 138 of the motor 134 via a drive belt or other means. The present disclosure is not limited to any particular mechanism for connecting the second element 142 to the motor 134.

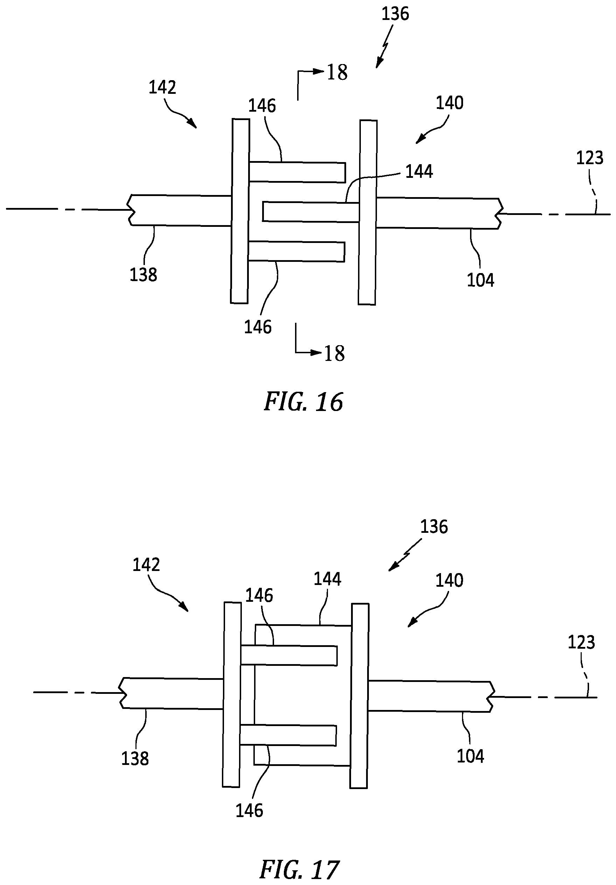

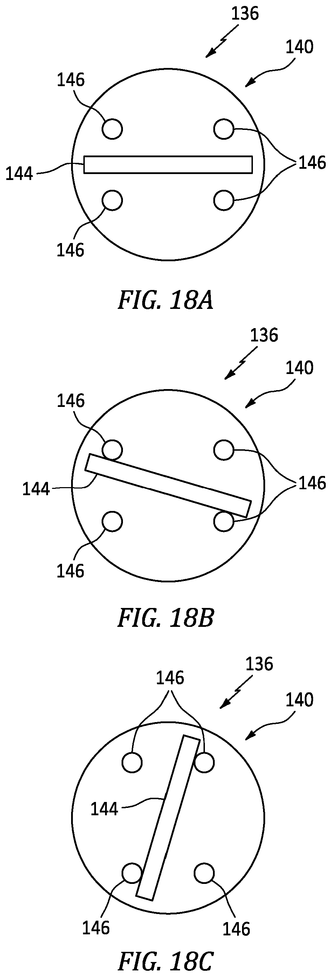

The clutch mechanism 136 may assume a variety of different first and second element 140, 142 configurations. For example, in a first exemplary embodiment shown in FIGS. 16-18C, the clutch mechanism 136 includes a first element 140 having a blade 144, and a second element 142 having a plurality of fingers 146. The first element 140 is in communication with the motor 134 (i.e., rotatable via the motor 134) and the second element 142 is in communication with the axle 104 (i.e., rotation of the second element 142 causes the axle 104 to rotate). When the first and second elements 140, 142 are in the first rotational position (e.g., see FIGS. 16, 17, and 18A), the blade 144 is disposed between the fingers 146 (i.e., the blade 144 and the fingers 146 axially overlap with one another), but is not in contact with the fingers 146. Hence, in the first rotational position the clutch mechanism 136 is in a "contactless" state, and the substance dish 106 is positioned to receive a substance from the solid handling system (SHS). The axle 104 and attached substance dish 106 may be rotated into the second rotational position by rotating the first element 140. Rotation of the first element 140 causes the blade 144 to engage the fingers 146 (e.g., see FIG. 18B) and thereby rotate the second element 142 to the second rotational position (e.g., see FIG. 18C). As the second element 142, axle 104, and attached substance dish 106 rotate into the second rotational position, the substance deposited on the substance dish 106 is dumped from the substance dish 106 due to gravity. The second element 142, axle 104, and attached substance dish 106 may be rotated back into the first rotational position by reversing the above described process, or by continuing rotation in the same direction until the second element 142, axle 104, and attached substance dish 106 are once again in the first rotational position.

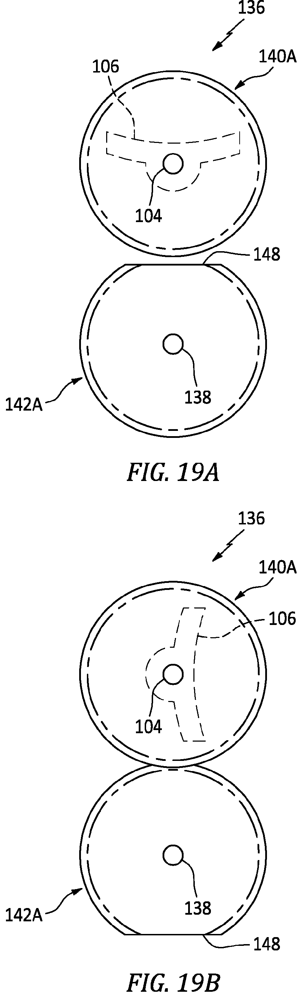

FIGS. 19A and 19B illustrate a second exemplary embodiment of a clutch mechanism 136. In this embodiment, the clutch mechanism 136 includes a first element 140 in the form of a first gear 140A, and a second element 142 in the form of a second gear 142A. The first gear 140A and the second gear 142A are axially aligned with one another. The second gear 142A is in communication with the motor 134 (i.e., rotatable via the motor 134) and the second gear 142A is in communication with the axle 104 (i.e., rotation of the first gear 140A causes the axle 104 to rotate). When the first and second gears 140A, 142A are in the first rotational position (e.g., see FIG. 19A), the first and second gears 140A, 142A are not in contact with one another; they are in a "contactless" state, and the substance dish 106 is positioned to receive a substance from the solid handling system (SHS). The axle 104 and attached substance dish 106 may be rotated into the second rotational position by rotating the first gear 140A. Rotation of the second gear 142A causes the second gear 142A to engage the first gear 140A and thereby rotate the first gear 140A to the second rotational position (e.g., see FIG. 19B). As the first gear 140A, axle 104, and attached substance dish 106 rotate into the second rotational position, the substance deposited on the substance dish 106 is dumped from the substance dish 106 due to gravity. The first gear 140A, axle 104, and attached substance dish 106 may be rotated back into the first rotational position by reversing the above described process, or by continuing rotation in the same direction until the first gear 140A, axle 104, and attached substance dish 106 are once again in the first rotational position. The present disclosure is not limited to any particular gear configuration. In FIGS. 19A and 19B, the first and second gears 140A, 142A are diagrammatically shown as having teeth, and the second gear 142A is shown as having a void region 148 which will not engage the first gear 140A, but the present disclosure is not limited thereto. Any first and second gear 140A, 142A configuration that permits the first and second gears 140A, 142A to be in a contactless state when the first and second gears 140A, 142A are in the first rotational position, and that permits the second gear 142A to drive the first gear 140A into the second rotational position can be used.

As indicated, the above described clutch mechanisms 136 are non-limiting examples, and the present disclosure is not limited to these particular contactless clutch mechanisms 136.

The clutch mechanism 136 embodiments described above may include an axle rotational position detector 114. In some embodiments, the axle rotational position detector 114 may be a contactless sensor capable of sensing the rotational position of the axle 104 without contacting the axle 104. An example of such a sensor is a contactless absolute rotary encoder operable to produce a signal output that is representative of current axle 104 position. The axle rotational position detector 114 is in communication with the control system (CS); e.g., to provide signal output representative of the current axle 104 rotational position to the control system that may be used in controlling the aspects of the present automated solution dispenser.

As shown in FIG. 15, the above described SWM embodiments include a balance 102 disposed outside of the delivery tube (11-1). The present disclosure is not limited to using a delivery tube (11-1) and may use alternative configuration containment units. The axle 104 extends lengthwise away from the balance 102 on a first side of the balance 102 and into the delivery tube (11-1). The substance dish 106 is disposed within the delivery tube (11-1) and is attached to the axle 104 adjacent the first axial end of the axle 104. Hence, the axle 104 and attached substance dish 106 are cantilevered out from the balance 102 on the first side of the balance 102. The axle 104 extends lengthwise away from the balance 102 on a second side of the balance 102 (opposite the first side). The second element 142 of the clutch mechanism 136 may be attached to the axle 104 at or adjacent to the second axial end 122 of the axle 104. Hence, the axle 104 and the second element 142 of the clutch mechanism 136 are cantilevered out from the balance 102 on the second side of the balance 102. As will be described in more detail below, disposing the balance 102 outside of the tube (11-1), which tube (or alternative configuration containment unit) substantially encircles/encloses the substance dish 106, decreases the opportunity for substances used within the automated solution dispenser to foul or otherwise negatively affect the balance 102, and facilitates cleaning of the substance dish 106 disposed within the tube (11-1).

As indicated above, most balances are sensitive to error caused by a load applied to the balance that is "off-center", including those that impart a torque to the balance. The above described SWM embodiments 100 may be viewed in terms of a free-body diagram wherein the load on the first side of the balance 102 (e.g., attributable to combined weights of the portion of the axle 104 disposed on the first side and the weight of the substance dish 106) is offset by the load on the second side of the balance 102 (e.g., attributable to combined weights of the portion of the axle 104 disposed on the second side and the weight of the second element 142 of the clutch mechanism 136). In the "contactless" state, the axle rotator 110 does not impart any load onto the axle 104 (other than the weight of the second element 142). If the first side load is unequal to the second side load, the unequal (i.e., "off-center") loading can negatively affect the accuracy of the balance. To avoid the balance 102 being loaded off-center, the SWM embodiments may be configured such that the loads on the first and second sides of the balance 102 are substantially equal to one another. In some instances, a counterweight 112 may be attached to the axle 104 on one side or the other to balance the opposing loads. The above SWM embodiments 100 provide a protected area (i.e., within the tube) where substances can be weighed, and the weighing elements can be readily cleaned as described herein. The above SWM embodiments 100 also eliminate weight variability that can be caused by attached cables or connectors that may vary in position and thereby cause off-center loading.

During the operation of the automated solution dispenser, solid substances may be deposited onto the substance dish 106 from the solid handling system (SHS 1-6). The weight of the substance deposited onto the substance dish 106 may, if great enough, affect the loading of the balance 102. Balances typically accommodate some amount of off-center loading. In some embodiments, the above exemplary SWM embodiments 100 may be configured to account for a maximum weight substance amount deposited on the substance dish 106 and still remain within the off-center loading parameters of the balance 102; e.g., the loading on the second side of the axle 104 may be slightly more than the loading on the first side of the axle 104 when the substance dish 106 is empty. Alternatively, the SWM embodiments may include a movable counterweight 112 that can be used to substantially balance the loads on the first and second sides of the balance 102 for a given amount of substance.

Embodiments of the exemplary SWM embodiments described above and shown in FIG. 15, may include aspects that facilitate positioning the axle 104 and attached substance dish 106 in the first rotational position, where the clutch mechanism 136 is in a "contactless" state. For example, in some embodiments the SWM may include a first rotational position return device (i.e., a "FRPR device") that facilitates positioning the axle 104 and attached substance dish 106 in the first rotational position. An example of a FRPR device is a body having a predetermined mass (e.g., a counterweight 112 as described above) asymmetrically positioned on the axle 104 (i.e., not uniformly disposed around the circumference of the axle 104). The asymmetric positioning of the mass is such that gravity will force the mass (and attached axle) to return to a position where the mass / axle 104 no longer rotates; e.g., a gravitational "home". In this position, the axle 104 is in the first rotational position and the substance dish is in the desired orientation (e.g., horizontal) to receive dispensed substance. If the clutch mechanism 136 does not return the axle 104 and attached substance dish 106 exactly to the first rotational position, gravity acting on the asymmetrically positioned mass (e.g., counterweight 112) will cause the axle 104 to rotate to the first rotational position. An example of a FRPR device includes a biasing mechanism (e.g., a spring) configured to return the axle 104 to the desired rotational position. As the axle 104 is rotated away from the first rotational position, the biasing mechanism applies a biasing force operable to return the axle 104 to the first rotational position.

To facilitate positioning of the axle in the first or second rotational positions, the axle rotator 110 may be configured to cause rotation of the axle 104 at different rotational velocities; e.g., a first rotational velocity and a second rotational velocity, where the second rotational velocity is slower than the first rotational velocity. For example, during operation as the axle 104 approaches the first rotational position, axle rotator may be configured to provide finer positional control of the axle 104 (e.g., slower movement and/or smaller incremental movement) to ensure the axle 104 returns to the first rotational position.

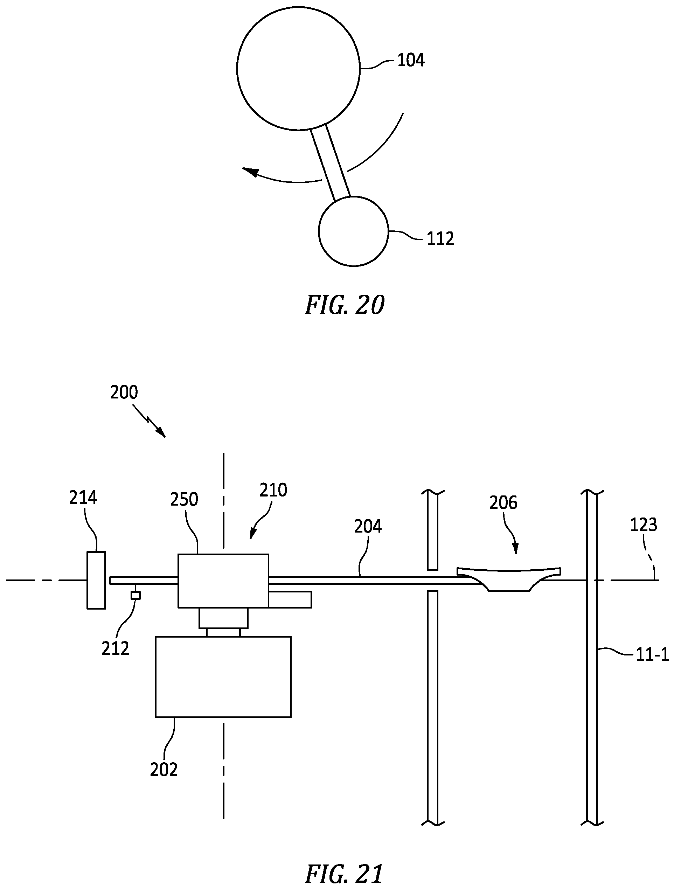

Referring to FIG. 21, in further alternative embodiments, the solids weighing mechanism (SWM) 200 may include a balance 202, an axle 204, a substance dish 206, and an axle rotator 210.

In these embodiments, the SWM balance 202, axle 204, and substance dish 206 may be as described above. The axle rotator 210 in these embodiments includes an actuator 250 (e.g., a motor) mounted directly on the balance 202. Depending on the configuration of the actuator 250, the axle 204 may pass directly through the center of the actuator 250. The actuator 250 is configured to rotate the axle 204 (and attached substance dish 206) between the first rotational position and the second rotational position. The axle 204 and attached substance dish 206 may be rotated back into the first rotational position by reversing the actuator 250, or by causing the actuator 250 to continuing rotating the axle 204 in the same direction until the axle 204 and attached substance dish 206 are once again in the first rotational position. The transfer of power to the actuator 250 may be accomplished by a contactless induction system, for example, to avoid any direct communication of cables or the like to the balance 202.

These alternative embodiments may also include a counterweight 212 (e.g., to balance the loads on the first and second sides of the balance 202), and/or an axle rotational position detector 214. The counterweight 212 and/or an axle rotational position detector 214 may be as described above.

The actuator 250 (and the axle rotational position detector 214) are in communication with the control system (CS) and controllable by the CS.

The above described alternative embodiments of the solids weighing mechanism (SWM) 100, 200 provide a mechanism having a substance dish 106 for receiving substances disposed within a containment structure (e.g., tube 11-1) and a weighing mechanism (e.g., balance 102) disposed outside of that containment structure. This configuration is significant for several reasons. For example, weighing devices (e.g., balance 102) that have the accuracy to measure substance amounts useful in an automated solution dispenser necessarily are very sensitive devices, and typically electronically controlled. Such devices are typically very sensitive to fouling by foreign materials; e.g., very fine airborne substance particles. Disposing the balance 102 outside the containment structure greatly decreases the chance of substance fouling. As another example, structure for receiving and holding substances in a SWM (e.g., substance dish 106) necessarily must come into contact with the substance. Once a substance is weighed and discharged, any of the substance that remains with the structure for receiving and holding substances in a SWM may be contaminated for subsequent procedures. This is particularly true for automated solution dispensers that are configured to produce a substantial number of solutions containing a substantial number of substances. As described herein, the potential for contamination is typically addressed by a Flush and Verification System (FVS). FVS's typically utilize a liquid (e.g., water) to rinse the structure for receiving and holding substances in a SWM. A non-limiting example of a FVS is described herein, and the above described alternative embodiments of the solids weighing mechanism (SWM) 100, 200 are not limited to use with the aforesaid FVS. As stated above, weighing devices (e.g., balance 102) having the accuracy to measure substance amounts within an automated solution dispenser are very sensitive devices, and typically electronically controlled. Such devices are typically susceptible to liquid fouling, or alternatively must be sealed to avoid liquid fouling. The above described alternative embodiments of the solids weighing mechanism (SWM) 100, 200 greatly decreases the chance of liquid fouling by disposing the balance 102 outside the containment structure, and locating the structure for receiving and holding substances in a SWM (e.g., substance dish 106) within a containment structure (e.g., tube 11-1); i.e., the structure that may require cleaning is disposed within the containment structure and the balance is protected from the cleaning liquids by the containment structure. Hence, these alternative embodiments of the solids weighing mechanism (SWM) 100, 200 provide an improved automated solution dispenser with greater reliability because the potential for the weighing device becoming fouled (by liquid or substance) is significantly decreased, and one that has the ability to handle a substantial number of substances with decreased risk of contamination.

In the FVS embodiments described herein, the FVS provides the automated solution dispenser is configured to clean elements (e.g., the CMC) and to verify the cleanliness of the same; e.g., by measuring the conductivity, or equivalent, of the water leaving the CMC to measure the cleanliness. Some alternative embodiments of the solids weighing mechanism (SWM) 100, 200 may include structure for detecting evaporation of water within the CMC (e.g., within the tube 11-1). For example, the structure may sense the presence of water vapor within the air. Once a cleaning cycle is completed and the evaporated water (e.g., water vapor) is purged from the environment within the dispenser, the cleanliness and dryness of the device can be verified before the next solution is prepared.

The above described alternative embodiments of the solids weighing mechanism (SWM) 100, 200 may be utilized as a component within the automated solution dispenser embodiments described herein. The above described alternative SWM embodiments 100, 200 are not, however, limited to the automated solution dispenser embodiments described herein, and may be utilized within alternative automated solution dispenser configurations. In addition, the above described alternative SWM embodiments 100, 200 have been described in the context of a solid substance weighing mechanism. The present disclosure SWM embodiments 100, 200 are not limited to weighing solid substances, and may be used to measure liquids, or both solids and liquids.

### Bottle Handling System

The purpose of the BHS, refer to FIG. 14 is to ensure that the right bottle is placed in the right position of the bottling station. The BHS also has the Bottle Labelling (14-5) system that marks the bottles with the necessary information. There are various options for the bottle handling, from having a single bottle station to a fully automated system. BHS embodiments may be configured to: a) determine bottle position; b) perform bottle position verification (14-3); and c) perform bottle type (no bottle, empty bottle, full bottle) verification (14-3). Additional systems may include a RFID/barcode reader (14-4) and bottle storage. The bottle labelling system may provide labels that can be attached to the chemical bottles. Alternatively, the labels can be automatically applied to the bottles or the information can be applied directly to the bottle; e.g., by ink-jet.

The bottle (14-1) may be stored in a storage area until needed. A conveyer system (14-2a) takes a bottle (14-1) to the filling station (14-3). On the path to the filling station, the system may include a reader (14-4) which will verify the solution intended to be place into the bottle (14-1). At the filling station, the position of the bottle will be verified and whether the bottle is empty. Once confirmed, the bottle (14-1) can be filled with the newly created solution. Another second conveyer system (14-2b) may be configured to move the bottle (14-1) to a pick-up area. During the transition to the pick-up area, bottle label/marking (14-5) may be applied. The conveyer systems might consist of a belt or tape mechanism, or a cassette/magazine mechanism. Alternatively, the bottle handling can be simplified by manually placing the bottle in the filling stating and then applying the label manually. The Filtration system can be integrated into the BHS, or it may be separate from the BHS.

### Process Description

Whilst there are going to be slightly different processes for the various solutions (depending on the solution needs and chemistry process), a generic description of an example process may include the following steps: a) flush and verify cleanliness of the CMC; b) start dosing the following in parallel: water, any components available as stock solutions, any components available in solid form; e.g., dose water so that once dosing is complete, an estimated 80% of the end amount has been filled (barring chemical need of having more); c) stir during the whole period and stop once all the dosing is done and everything has dissolved; d) fill up to 99.9% of required volume; e) adjust pH with either liquid or solid components until target pH is reached, stirring during the process; f) output the solution (possibly to a bottle or other container); g) print a label for the container with all the critical information about its contents; h) store information about what was done to create traceability; and i) start the clean cycle on the CMC in preparation for new solution. The aforesaid process description is provided for illustrative purposes, and the present disclosure is not limited thereto.

When the device is not in use, a premade solution may be pumped into the CMC to safely store the pH instrument. Before a new solution is made, the CMC may be drained and cleaned. In alternative embodiments, pH instruments that can be stored in a dry environment may be used to obviate the need to store the pH instruments in an aqueous environment. The pH sensor(s) may be calibrated at regular intervals, using laboratory accepted standard solutions; e.g., a spot check calibration can be performed using a verified pH solution, or a more complete calibration can be performed using a plurality of different verified pH solutions.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

## Claims

1. A substance weighing system (100), comprising:
a balance (102);
an axle (104) having a rotational axis (123) that extends between a first axial end (120) and a second axial end (122);
a substance dish (106) fixed to the axle (104) adjacent the first axial end (120);
an axle support bracket (108) configured to mount the axle (104) in a manner that permits the axle (104) to rotate about its rotational axis (123) relative to the support bracket (108), the support bracket (108) is in communication with the balance (102); and **characterised in that** it further comprises
an axle rotator (110) having a motor (134) and a clutch mechanism (136), the clutch mechanism (136) is in communication with the motor (134) and is configured to selectively cause the axle (104) to rotate between a first rotational position and a second rotational position, wherein in the first rotational position the substance dish (106) is positioned to hold an amount of substance, and in the first rotational position the axle rotator (110) is in a contactless state, and in the second rotational position, the substance dish (106) is positioned to release the amount of substance.

2. The system of claim 1, wherein the clutch mechanism (136) includes a first element (140) attached to the axle (104) and a second element (142) in communication with the motor (134), and wherein in the first rotational position the first element (140) and the second element (142) are not in contact with one another.

3. The system of claim 2, wherein the clutch mechanism (136) is configured such that rotation of the second element (142) from the first rotational position to the second rotational position causes the second element (142) to contact and rotate the first element in a first direction from the first rotational position to the second rotational position.

4. The system of claim 3, wherein a portion of the first element (140) axially overlaps with a portion of the second element (142).

5. The system of claim 3, wherein the clutch mechanism (136) is configured such that rotation of the second element (142) from the second rotational position to the first rotational position causes the second element (142) to contact and rotate the first element (140) in a second direction, wherein the second direction is opposite the first direction.

6. The system of claim 3, wherein the clutch mechanism (136) is configured such that rotation of the second element (142) from the second rotational position to the first rotational position causes the second element (142) to contact and rotate the first element (140) in the first direction.

7. The system of claim 3, wherein the first element (140) and the second element (142) are axially aligned with one another.

8. The system of claim 7, wherein the first element (140) and the second element (142) are configured for geared engagement with one another for a portion of a complete rotation of the second element (142).

9. The system of claim 1, wherein the balance (102) has a load measuring axis (116), and the system includes a counterweight (112) attached to the axle (104), the counterweight (112) attached to the axle (104) in such a manner so as to be selectively positionable relative to the load measuring axis (116).

10. The system of claim 1, wherein the system further comprises a first rotational position return device configured to position the axle (104) in the first rotational position.

11. A method of weighing a substance, comprising:
providing a substance weighing system (100) having:
a balance (102);
a containment unit disposed outside of and on a first side of the balance (102);
an axle (104) having a rotational axis (123) that extends between a first axial end (120) and a second axial end (122);
a substance dish (106) fixed to the axle (104) adjacent the first axial end (120),
wherein the substance dish (106) is disposed within the containment unit; and
**characterised in that** it is further having
an axle rotator (110) having a clutch mechanism (136), the axle rotator (110) disposed on a second side of the balance (102), the second side opposite the first side;
operating the axle rotator (110) to position the axle (104) in a first rotational position, and in the first rotational position the axle rotator (110) is in a contactless state;
depositing a substance amount on the substance dish (106) disposed within the containment unit while the axle (104) is in the first rotational position;
weighing the substance amount using the balance (102) while the axle (104) is in the first rotational position;
rotating the axle (104) from the first rotational position to a second rotational position, where in the second rotational position, the substance dish (106) is positioned to release the substance amount.

## Patentansprüche

1. Substanzwiegesystem (100), umfassend:
eine Waage (102);
eine Welle (104) mit einer Drehachse (123), die sich zwischen einem ersten axialen Ende (120) und einem zweiten axialen Ende (122) erstreckt;
eine Substanzschale (106), die an der Welle (104) benachbart zu dem ersten axialen Ende (120) befestigt ist;
eine Wellenstützhalterung (108), die dazu konfiguriert ist, die Welle (104) in einer Weise zu montieren, die es der Welle (104) ermöglicht, sich um ihre Drehachse (123) relativ zu der Stützhalterung (108) zu drehen, wobei die Stützhalterung (108) in Kommunikation mit der Waage (102) steht; und
**dadurch gekennzeichnet, dass** es ferner Folgendes umfasst
eine Wellendrehvorrichtung (110) mit einem Motor (134) und einem Kupplungsmechanismus (136), wobei der Kupplungsmechanismus (136) in Kommunikation mit dem Motor (134) steht und dazu konfiguriert ist, die Welle (104) selektiv zu veranlassen, sich zwischen einer ersten Drehposition und einer zweiten Drehposition zu drehen, wobei in der ersten Drehposition die Substanzschale (106) so positioniert ist, dass sie eine Menge an Substanz hält, und in der ersten Drehposition die Wellendrehvorrichtung (110) in einem berührungslosen Zustand ist, und in der zweiten Drehposition die Substanzschale (106) so positioniert ist, dass sie die Menge an Substanz freigibt.

2. System nach Anspruch 1, wobei der Kupplungsmechanismus (136) ein erstes Element (140), das an der Welle (104) angebracht ist, und ein zweites Element (142) in Kommunikation mit dem Motor (134) enthält, und wobei in der ersten Drehposition das erste Element (140) und das zweite Element (142) nicht in Kontakt miteinander sind.

3. System nach Anspruch 2, wobei der Kupplungsmechanismus (136) derart konfiguriert ist, dass eine Drehung des zweiten Elements (142) aus der ersten Drehposition in die zweite Drehposition bewirkt, dass das zweite Element (142) in Kontakt mit dem ersten Element ist und dieses in einer ersten Richtung aus der ersten Drehposition in die zweite Drehposition dreht.

4. System nach Anspruch 3, wobei ein Abschnitt des ersten Elements (140) einen Abschnitt des zweiten Elements (142) axial überlappt.

5. System nach Anspruch 3, wobei der Kupplungsmechanismus (136) derart konfiguriert ist, dass eine Drehung des zweiten Elements (142) aus der zweiten Drehposition in die erste Drehposition bewirkt, dass das zweite Element (142) in Kontakt mit dem ersten Element (140) ist und dieses in einer zweiten Richtung dreht, wobei die zweite Richtung entgegengesetzt zu der ersten Richtung ist.

6. System nach Anspruch 3, wobei der Kupplungsmechanismus (136) derart konfiguriert ist, dass eine Drehung des zweiten Elements (142) aus der zweiten Drehposition in die erste Drehposition bewirkt, dass das zweite Element (142) in Kontakt mit dem ersten Element (140) ist und dieses in der ersten Richtung dreht.

7. System nach Anspruch 3, wobei das erste Element (140) und das zweite Element (142) axial aufeinander ausgerichtet sind.

8. System nach Anspruch 7, wobei das erste Element (140) und das zweite Element (142) für einen Verzahnungseingriff miteinander für einen Abschnitt einer vollständigen Drehung des zweiten Elements (142) konfiguriert sind.

9. System nach Anspruch 1, wobei die Waage (102) eine Lastmessachse (116) aufweist und das System ein Gegengewicht (112) enthält, das an der Welle (104) angebracht ist, wobei das Gegengewicht (112) auf eine solche Weise an der Welle (104) angebracht ist, dass es relativ zu der Lastmessachse (116) selektiv positionierbar ist.

10. System nach Anspruch 1, wobei das System ferner eine erste Drehpositionsrücksetzvorrichtung umfasst, die dazu konfiguriert ist, die Welle (104) in der ersten Drehposition zu positionieren.

11. Verfahren zum Wiegen einer Substanz, umfassend:
Bereitstellen eines Substanzwiegesystems (100), das Folgendes aufweist:
eine Waage (102);
eine Sicherheitseinheit, die außerhalb der Waage (102) und auf einer ersten Seite davon angeordnet ist;
eine Welle (104) mit einer Drehachse (123), die sich zwischen einem ersten axialen Ende (120) und einem zweiten axialen Ende (122) erstreckt;
eine Substanzschale (106), die an der Welle (104) benachbart zu dem ersten axialen Ende (120) befestigt ist, wobei die Substanzschale (106) innerhalb der Sicherheitseinheit angeordnet ist; und
**dadurch gekennzeichnet, dass** es ferner Folgendes aufweist
eine Wellendrehvorrichtung (110) mit einem Kupplungsmechanismus (136), wobei die Wellendrehvorrichtung (110) auf einer zweiten Seite der Waage (102) angeordnet ist, wobei die zweite Seite der ersten Seite gegenüberliegt;
Betreiben der Wellendrehvorrichtung (110), um die Welle (104) in einer ersten Drehposition zu positionieren, und wobei die Wellendrehvorrichtung (110) in der ersten Drehposition in einem berührungslosen Zustand ist;
Ablegen einer Substanzmenge auf der Substanzschale (106), die innerhalb der Sicherheitseinheit angeordnet ist, während sich die Welle (104) in der ersten Drehposition befindet;
Wiegen der Substanzmenge unter Verwendung der Waage (102), während sich die Welle (104) in der ersten Drehposition befindet;
Drehen der Welle (104) aus der ersten Drehposition in eine zweite Drehposition, wobei in der zweiten Drehposition die Substanzschale (106) so positioniert ist, dass sie die Substanzmenge freigibt.

## Revendications

1. Système de pesée de substance (100) comprenant :
une balance (102) ;
un arbre (104) comportant un axe de rotation (123) qui s'étend entre une première extrémité axiale (120) et une seconde extrémité axiale (122) ;
une coupelle de substance (106) fixée à l'arbre (104) à proximité de la première extrémité axiale (120) ;
une patte de support d'arbre (108) conçue pour monter l'arbre (104) d'une manière qui permet à l'arbre (104) de tourner autour de son axe de rotation (123) par rapport à la patte de support (108), la patte de support (108) est en communication avec la balance (102) ; et **caractérisé en ce qu'**il comprend en outre
un rotateur d'arbre (110) comportant un moteur (134) et un mécanisme d'embrayage (136), le mécanisme d'embrayage (136) est en communication avec le moteur (134) et est conçu pour amener sélectivement l'arbre (104) à tourner entre une première position de rotation et une seconde position de rotation, dans lequel, dans la première position de rotation, la coupelle de substance (106) est positionnée pour contenir une quantité de substance, et dans la première position de rotation, le rotateur d'arbre (110) est dans un état sans contact, et dans la seconde position de rotation, la coupelle de substance (106) est positionnée pour libérer la quantité de substance.

2. Système de la revendication 1, dans lequel le mécanisme d'embrayage (136) comprend un premier élément (140) fixé à l'arbre (104) et un second élément (142) en communication avec le moteur (134), et dans lequel, dans la première position de rotation, le premier élément (140) et le second élément (142) ne sont pas en contact l'un avec l'autre.

3. Système de la revendication 2, dans lequel le mécanisme d'embrayage (136) est conçu de sorte que la rotation du second élément (142) de la première position de rotation à la seconde position de rotation amène le second élément (142) à entrer en contact avec le premier élément et à le faire tourner dans une première direction de la première position de rotation à la seconde position de rotation.

4. Système de la revendication 3, dans lequel une partie du premier élément (140) chevauche axialement une partie du second élément (142).

5. Système de la revendication 3, dans lequel le mécanisme d'embrayage (136) est conçu de sorte que la rotation du second élément (142) de la seconde position de rotation à la première position de rotation amène le second élément (142) à entrer en contact avec le premier élément (140) et à le faire tourner dans une seconde direction, dans lequel la seconde direction est opposée à la première direction.

6. Système de la revendication 3, dans lequel le mécanisme d'embrayage (136) est conçu de sorte que la rotation du second élément (142) de la seconde position de rotation à la première position de rotation amène le second élément (142) à entrer en contact avec le premier élément (140) et à le faire tourner dans la première direction.

7. Système de la revendication 3, dans lequel le premier élément (140) et le second élément (142) sont alignés axialement l'un avec l'autre.

8. Système de la revendication 7, dans lequel le premier élément (140) et le second élément (142) sont conçus pour une prise engrenée l'un avec l'autre pour une partie d'une rotation complète du second élément (142).

9. Système de la revendication 1, dans lequel la balance (102) comporte un axe de mesure de charge (116), et le système comprend un contrepoids (112) fixé à l'arbre (104), le contrepoids (112) étant fixé à l'arbre (104) de manière à pouvoir être positionné de manière sélective par rapport à l'axe de mesure de charge (116).

10. Système de la revendication 1, ledit système comprenant en outre un premier dispositif de retour de position de rotation conçu pour positionner l'arbre (104) dans la première position de rotation.

11. Procédé de pesée d'une substance, comprenant :
la fourniture d'un système de pesée de substance (100) comportant :
une balance (102) ;
une unité de confinement disposée à l'extérieur de et sur un premier côté de la balance (102) ;
un arbre (104) comportant un axe de rotation (123) qui s'étend entre une première extrémité axiale (120) et une seconde extrémité axiale (122) ;
une coupelle de substance (106) fixée à l'arbre (104) à proximité de la première extrémité axiale (120), ladite coupelle de substance (106) étant disposée à l'intérieur de l'unité de confinement ; et **caractérisé en ce qu'**il comporte en outre
un rotateur d'arbre (110) comportant un mécanisme d'embrayage (136), le rotateur d'arbre (110) étant disposé sur un second côté de la balance (102), le second côté étant opposé au premier côté ;
le fonctionnement du rotateur d'arbre (110) pour positionner l'arbre (104) dans une première position de rotation, et dans la première position de rotation, le rotateur d'arbre (110) est dans un état sans contact ;
le dépôt d'une quantité de substance sur la coupelle de substance (106) disposée à l'intérieur de l'unité de confinement pendant que l'arbre (104) est dans la première position de rotation ;
la pesée de la quantité de substance à l'aide de la balance (102) pendant que l'arbre (104) est dans la première position de rotation ;
la rotation de l'arbre (104) de la première position de rotation à une seconde position de rotation, où dans la seconde position de rotation, la coupelle de substance (106) est positionnée pour libérer la quantité de substance.
